(19) Europäisches Patentamt / European Patent Office / Office européen des brevets

(11) **EP 2 040 196 A1**

(12) **EUROPEAN PATENT APPLICATION**

(43) Date of publication:
**25.03.2009 Bulletin 2009/13**

(51) Int Cl.:
**G06K 9/00** *(2006.01)*  **B60W 30/12** *(2006.01)*

(21) Application number: **08016230.8**

(22) Date of filing: **15.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.09.2007 JP 2007245450**

(71) Applicant: **Honda Motor Co., Ltd.**
**Minato-ku**
**Tokyo 107-8556 (JP)**

(72) Inventors:
• **Sakamoto, Yosuke,**
**c/o Honda R&D Co., Ltd.**
**Wako-shi**
**Saitama 351-0193 (JP)**
• **Unoura, Kiyozumi**
**Wako-shi**
**Saitama 351-0193 (JP)**

(74) Representative: **Prechtel, Jörg et al**
**Weickmann & Weickmann**
**Patentanwälte**
**Postfach 86 08 20**
**81635 München (DE)**

(54) **Road shape estimating device**

(57)  Roadside three-dimensional objects arranged along the road at irregular intervals are used to accurately estimate a shape of the road. A three-dimensional object extractor extracts a three-dimensional object existing in an image captured by an image pickup device. A feature point extractor extracts a feature point from the three-dimensional object and a feature point corrector corrects a displacement of the feature point according to a detected running state of the vehicle. A residual image generator generates a residual image of the feature point whose displacement is corrected and the running state of the subject vehicle. A vanishing point calculator calculates a vanishing point and a road shape estimator estimates a road shape based on a straight line closest to both right and left sides of the subject vehicle from the straight lines passing through the vanishing point.

FIG.1

**Description**

BACKGROUND OF THE INVENTION

FIELD OF THE INVENTION

The present invention relates to a road shape estimating device having an image pickup device that picks up or captures an image of an area in front of a subject vehicle at predetermined time intervals; a three-dimensional object extractor that extracts a three-dimensional object existing in the image; and a road shape estimator that estimates a road shape based on the three-dimensional object.

DESCRIPTION OF THE RELATED ART

There is known a lane-keeping system that detects a white line on a road from an image in front of a subject vehicle captured by a camera and assists the driver of the vehicle with steering of the vehicle such that the vehicle does not deviate from a lane defined between left and right white lines, for example.

Also, Japanese Patent Application Laid-open No. 11-203458 discloses that a road shape or a road grade in front of a subject vehicle is recognized by an in-vehicle camera capturing an image of markers (delineators) having circular reflectors arranged at regular intervals along a roadside.

However, the technique of detecting a white line in order to recognize a road shape has a drawback wherein the road shape cannot be recognized where the road does not have a white line or the white line is fading. The technique for detecting a delineator to recognize a road shape has a problem wherein the road shape cannot be recognized where delineators are not arranged along the roadside. In order to address the above-described drawbacks, various roadside objects could be detected by a camera to recognize the road shape. However, the roadside objects do not necessarily exist at regular intervals, and there is a possibility that the road shape cannot be recognized in a part where the objects are sparsely arranged or arranged at irregular intervals.

SUMMARY OF THE INVENTION

The present invention has been made in view of the aforementioned circumstances, and it is an aspect of the present invention to accurately estimate a road shape by using roadside three-dimensional objects arranged at irregular intervals.

In order to achieve such an aspect, according to a first feature of the present invention, there is provided a road shape estimating device having an image pickup device that picks up or captures an image of an area in front of a subject vehicle at predetermined time intervals; a three-dimensional object extractor that extracts a three-dimensional object existing in the image; and a road shape estimator that estimates a road shape based on the three-dimensional object. The inventive device also includes a running state detector that detects a running state of the subject vehicle; a feature point extractor that extracts a feature point of the three-dimensional object; a feature point corrector that corrects a displacement of the feature point according to the running state of the subject vehicle; a residual image generator that generates a residual image of the feature point from the feature point which is extracted from an image picked up last time and whose displacement is corrected and the running state of the subject vehicle; and a vanishing point calculator that calculates a vanishing point at which a plurality of straight lines passing through the feature point and the residual image corresponding to each other cross each other, and wherein the road shape estimator estimates a road shape based on a straight line closest to both left and right sides of the subject vehicle out of the straight lines passing through the vanishing point.

With the first feature, the image pickup device picks up or captures an image of an area in front of a subject vehicle at predetermined time intervals. The three-dimensional object extractor extracts a three-dimensional object existing in the image. The feature point extractor extracts a feature point of the three-dimensional object. The feature point corrector corrects a displacement of the feature point according to a running state of the subject vehicle detected by the running state detector. The residual image generator generates a residual image of the feature point from the feature point whose displacement is corrected and the running state of the subject vehicle. The vanishing point calculator then calculates a vanishing point at which a plurality of straight lines passing through the feature point and the residual image corresponding to each other cross each other. The road shape estimator estimates a road shape based on a line segment closest to both left and right sides of the subject vehicle out of the line segments passing through the vanishing point. Therefore, even when there is no white line on a road, or the white line is faded or not clear, or the three-dimensional objects are sparsely arranged or arranged at irregular intervals, the road shape is accurately estimated.

According to a second feature of the present invention, in addition to the first feature, the feature point extractor extracts a position where the three-dimensional object contacts a ground surface as the feature point.

With the second feature, the feature point extractor extracts a position where the three-dimensional object contacts a road surface as the feature point. Therefore, the road shape is more accurately estimated.

In the following, an embodiment of the present invention will be described by reference to the attached drawings.

BRIEF DESCRIPTION OF THE DRAWINGS

FIG. 1 is a block diagram of an electronic control unit of a road shape estimating device according to a preferred embodiment of the invention;

FIGs. 2A-2C are schematic diagrams of a feature point corrector;

FIGs. 3A-3D are schematic diagrams of a residual image generator and a vanishing point calculator;

FIGs. 4A-4D are schematic diagrams of an image picking-up step through a region setting step;

FIG. 5 is a diagram illustrating a method of calculating a vanishing point from a plurality of straight lines;

FIG. 6 is a diagram illustrating a method of selecting a straight line which represents the outline of a road in each region; and

FIG. 7 is a diagram illustrating a method of estimating a road shape from the selected straight line.

DESCRIPTION OF THE PREFERRED EMBODIMENT

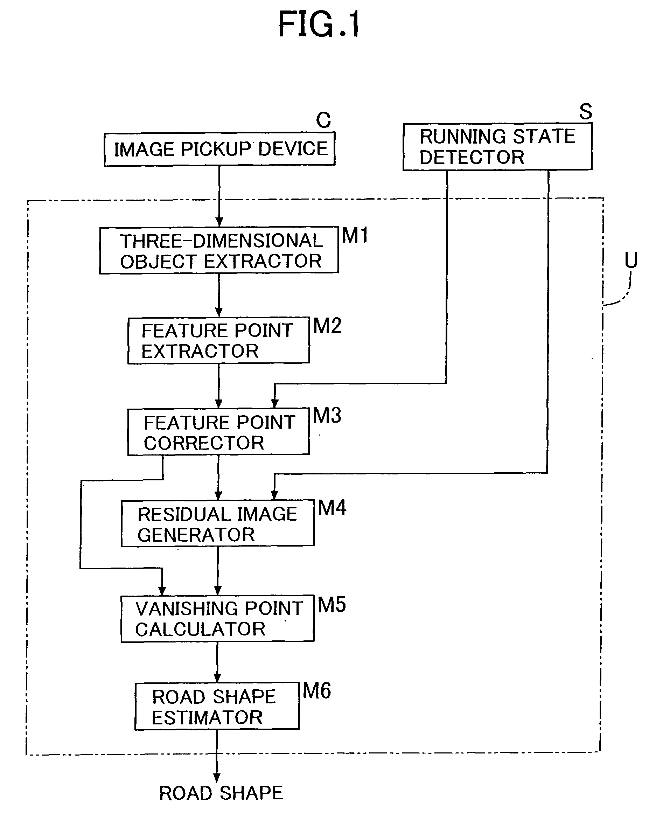

As shown in the block diagram of FIG. 1, an electronic control unit U of the inventive road shape estimating device includes a three-dimensional object extractor M1, a feature point extractor M2, a feature point corrector M3, a residual image generator M4, a vanishing point calculator M5, and a road shape estimator M6.

An image pickup device C, which may include a camera or any other device capable of picking up or otherwise capturing an image of an area in front of a subject vehicle at predetermined time intervals, is connected to the three-dimensional object extractor M1. The three-dimensional object extractor M1 extracts a three-dimensional object, such as a lighting pole, a utility pole, a guardrail, plants, a building or the like, which is located along the roadside, from the image of the area in front of or at least in the traveling direction of the subject vehicle that is picked up or captured by the image pickup device C. The three-dimensional object is an object having a height extending from a surface of the road, and does not include a white line or the like provided on the road surface. The feature point extractor M2 extracts the data of a location where the three-dimensional object contacts the ground surface and designates same as a feature point. The three-dimensional object and the feature point of the three-dimensional object are extracted by using a known motion-stereo technique in which a change in positional relationship between the image pickup device C and a photographic subject accompanying the running of the subject vehicle is used.

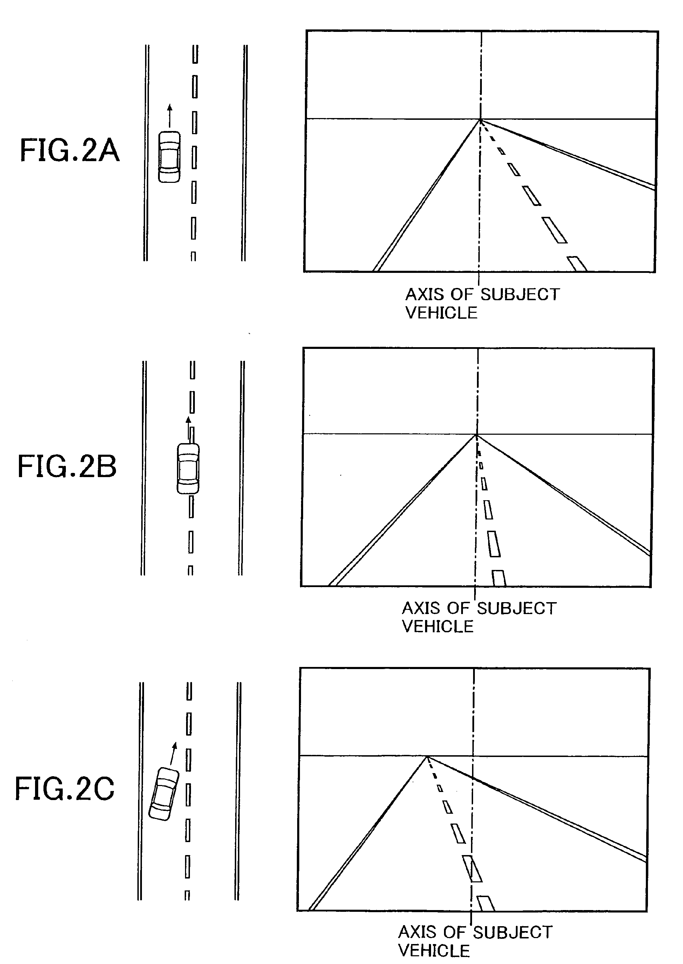

The feature point corrector M3 corrects any image deviation of the image pickup device C when the subject vehicle moves in parallel in the left and right direction from the center of a lane, or when the subject vehicle inclines with respect to the lane direction. When the subject vehicle runs straight in the center of a lane of a straight road, the road converges on the axis of the subject vehicle at an infinite distance, and a first side white line and the center line of the road appear symmetric with respect to the axis of the subject vehicle as shown in FIG. 2A.

Assuming that the subject vehicle moves in parallel in the right direction toward the center line from the center of the first or left lane from the above state, the position of the image pickup device C mounted on the subject vehicle also moves in parallel in the right direction, and the positions of a second white line, the first white line, and the center line in the image move to the left with respect to the axis of the subject vehicle as shown in FIG. 2B. Accordingly, in this case, it is necessary to correct this state to the state of FIG. 2A by moving the positions of the first and second white lines and the center line in the image to the right.

Also, assuming that the axis of the subject vehicle inclines in the right direction with respect to the road direction, the image of the image pickup device C rotates in the left direction, as shown in FIG. 2C. Accordingly, in this case, it is necessary to correct this state to the state of FIG. 2A by rotating the image of the image pickup device C in the right direction. With the correction by the feature point corrector M3, an image equal to the image (see FIG. 2A) of the case where the subject vehicle runs straight in the center of the left lane is obtained even when the subject vehicle is traveling in a serpentine or non-straight manner.

Data of the position in the left and right direction and the yaw angle of the subject vehicle on the lane are required for any correction to be conducted by the feature point corrector M3. The data is obtained from the running state of the subject vehicle, such as, for example, a vehicle speed, a yaw rate, a steering angle or the like, detected by the running state detector S connected to the feature point corrector M3.

If a number of three-dimensional objects are formed in a line at short or regular intervals along the road on which the subject vehicle is traveling, the road shape is detected using the three-dimensional objects. However, in reality, the interval between usable three-dimensional objects is irregular, and thus, it is difficult to detect the road shape in many cases. Accordingly, in addition to the feature point of each three-dimensional object, the residual image generator M4 generates a residual image of the feature point on the image picked up or captured by the image pickup device C.

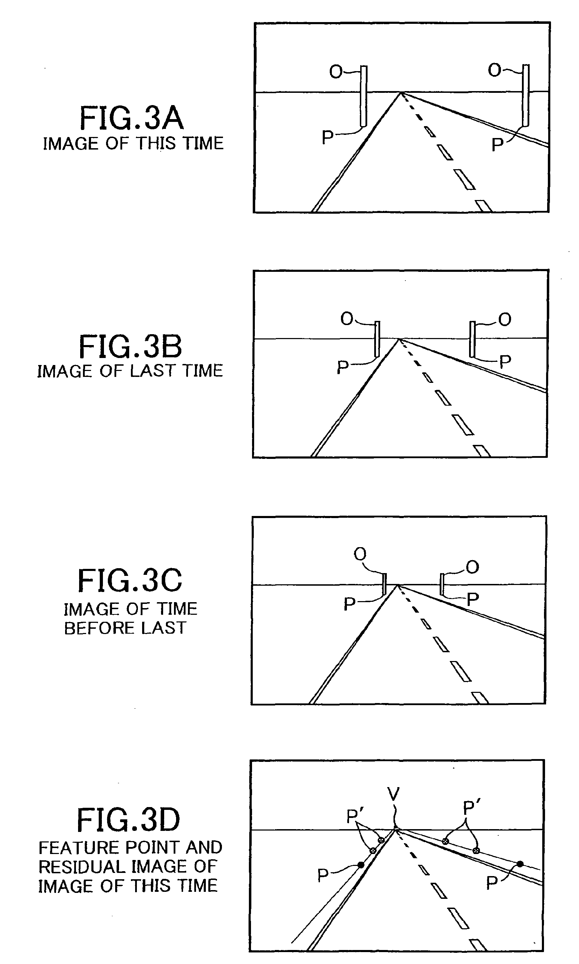

FIG. 3A illustrates a case in which three-dimensional objects O, i.e., a series of utility poles, are disposed on the right and left sides of a relatively straight road on which the subject vehicle is traveling at a constant speed. The image pickup device C captured an image of the area in front of the vehicle at predetermined time intervals. FIG. 3A illustrates a current or present state of the vehicle. FIG. 3A is an image of this time. FIG. 3B is an image of the state before the image of FIG. 3A was captured during which the three-dimensional objects O appear farther than those in the image of FIG. 3A. FIG. 3C is an image of the state preceding the state illustrated in FIG. 3B, in which the three-dimensional objects O appear much farther than those in the image of FIG. 3B.

That is, when the subject vehicle travels along the road, the three-dimensional objects O approach the subject vehicle from afar. FIG. 3D illustrates an image in which feature points P of the image of the last time (FIG. 3B) and feature points P of the image of the time before last (FIG. 3C) are superimposed as residual images P' on the image of this time in which feature points P that are the points where the three-dimensional objects O contact a ground surface are captured. However, the subject vehicle does not necessarily run straight at constant speeds and may accelerate or decelerate or may make a turn while the images of this time (FIG. 3A), the last time (FIG. 3B), and the time before last (FIG. 3C) are being captured. Thus, the positions of the residual images P' on the image of this time (FIG. 3D) are corrected according to the motion state of the subject vehicle detected by the running state detector S.

In other words, although the example in which the subject vehicle runs at constant speed on the straight-line road is shown in (FIGs. 3A-3D), the positions of the residual images P' on the image of this time are determined by considering the running state of the subject vehicle, such as a vehicle speed, a yaw rate, and a steering angle, in combination with the positional relationship between the feature points P of the image of this time (FIG. 3A) and the feature points P of the image of the last time (FIG. 3B) when the road takes a curve or when the subject vehicle accelerates or decelerates.

When X represents an input (feature point), Y an output (residual image), t the frame number of an image of this time, t-1 the frame number of an image of the last time, and ω a constant number, the residual image P' is calculated by the equation:

$$Y_t = \omega X_t + (1-\omega)Y_{t-1}$$

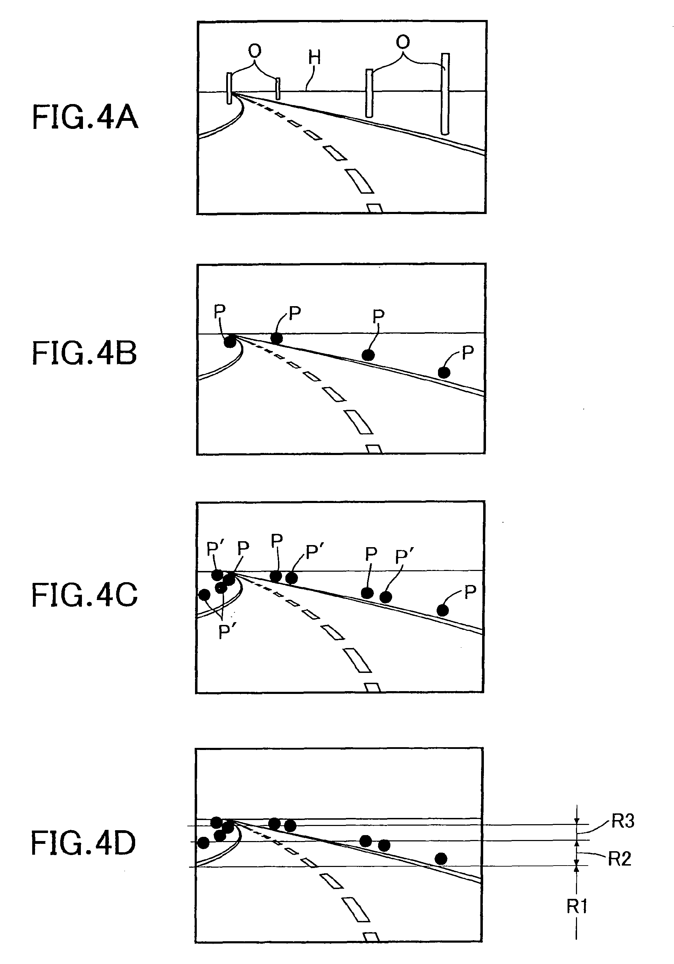

Summarizing the above description, FIG. 4A is the image in front of the subject vehicle picked up by the image pickup device C, in which a road curving to the left extends toward a horizon line H. Three-dimensional objects O, e.g., utility poles, arranged along the road at intervals, are extracted by the three-dimensional object extractor M1. In FIG. 4B, feature points P at the lower ends of the three-dimensional objects O in the image are extracted by the feature point extractor M2, and the positions of the feature points P are corrected by the feature point corrector M3 so that the influences of the subject vehicle turning left and/or right are compensated or otherwise eliminated. In FIG. 4C, the residual images P' generated by the residual image generator M4 are superimposed on the feature points P.

Subsequently, as shown in FIG. 4D, the image of FIG. 4C is divided into a plurality of regions R1, R2, and R3 (three regions in the illustrated exemplary embodiment) by a plurality of traverse lines (three lines in the embodiment) extending in the horizontal direction.

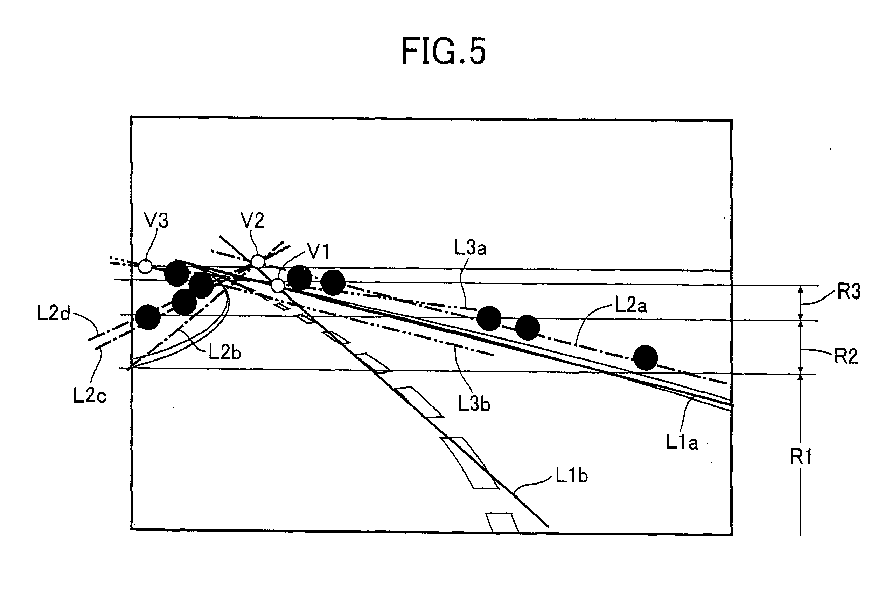

When the road takes a curve, by using the plurality of traverse lines to divide the road on the image into the plurality of regions R1, R2 and R3, the road included in each region R1, R2, and R3 is regarded as a straight line. As shown in FIG. 5, the vanishing point calculator M5 draws a plurality of straight lines connecting the feature point P and the residual image P' corresponding to each other in each of right and left sides of the road included in each region R1, R2 and R3. The straight lines cross each other at the same point, and the crossing point is defined as vanishing points V1, V2, and V3. If the plurality of straight lines do not cross each other at the same point due to a detection error or the like, the point(s) where the crossing frequency is/are the highest is selected as the vanishing point(s) V1, V2, and V3.

In the region R1 at the most front side, two straight solid lines L1 a and L1 b are drawn and the two straight lines L1 a and L1 b cross each other at the vanishing point V1. In the second region R2 from the second front side, four straight alternating long and short dash lines L2a, L2b, L2c, and L2d are drawn and the four straight lines L2a, L2b, L2c, and L2d cross each other at the vanishing point V2. In the third region R3 from the third front side, two straight alternate long and two short dashes lines L3a and L3b are drawn and the two straight lines L3a and L3b cross each other at the vanishing point V3.

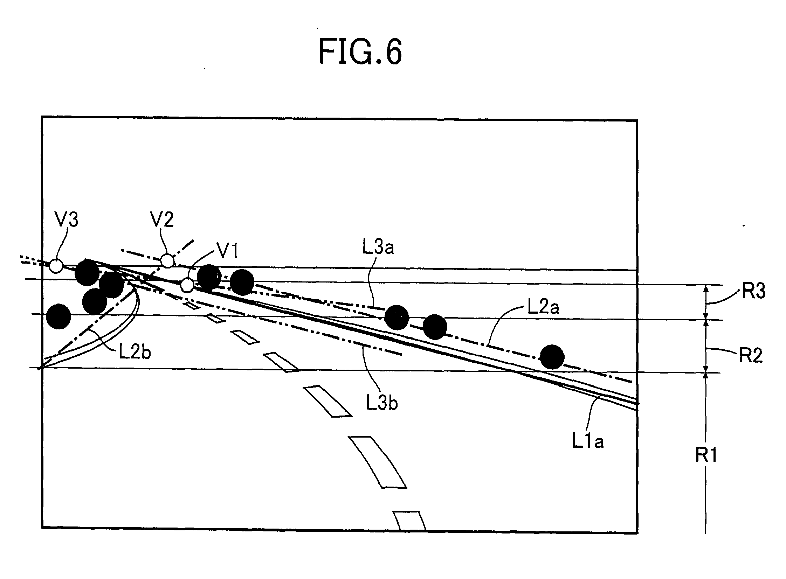

In each region R1, R2 and R3 obtained by dividing the image, the straight lines connecting the feature point P and the residual image P' corresponding to each other include a straight line corresponding to the three-dimensional object O close to the margin of the road and a straight line corresponding to the three-dimensional object O away from the margin of the road. The road shape estimator M6 selects the straight line closest to the margin of the road in the right side and left side of the road out of the straight lines as shown in FIG. 6. More specifically, the straight line L1 a is selected out of the two straight lines L1 a and L1b, and the straight line L1b is deleted in the region R1. The straight lines L2a and L2b are selected out of the four straight lines L2a, L2b, L2c, and L2d, the straight lines L2c and L2d are deleted in the region R2, and both of the straight lines L3a and L3b are selected in the region R3.

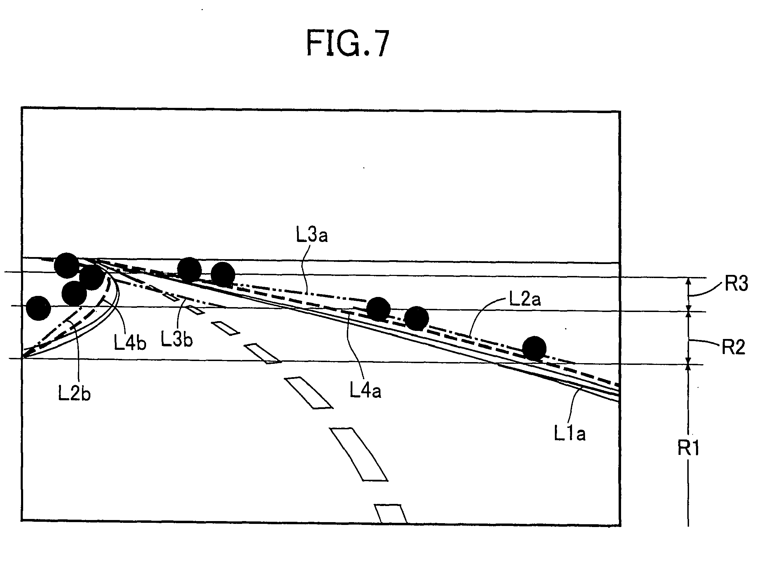

By smoothly connecting the straight lines L1 a, L2a, L2b, L3a and L3b selected in each region R1, R2 and R3 by using the Hough transform or the least-squares method, the entire road shape is estimated as indicated by dash lines L4a and L4b in FIG. 7.

As described above, even when a white line for dividing a lane is not provided on the road, or the white line is faded or even disappearing and cannot be detected, the road shape is estimated by using the roadside three-dimensional objects O. Also, even when the three-dimensional objects O are sparely arranged or arranged at irregular intervals along the road, the residual images P' that are the feature points P of the three-dimensional objects O detected before are calculated, and both the feature points P and the residual images P' are used to estimate the road shape. Accordingly, the shape of a road in any environment is accurately estimated. Also, since the feature point extractor M2 extracts a position where the three-dimensional object O contacts the road surface as the feature point P, the road shape is more accurately estimated.

Although an exemplary embodiment of the present invention is described above in detail, various design changes may be made without departing from the scope of the invention.

For example, although the image is divided into the three regions R1, R2 and R3 in the embodiment, the number of the regions is not limited to three and can be two or four or more.

Roadside three-dimensional objects arranged along the road at irregular intervals are used to accurately estimate a shape of the road. A three-dimensional object extractor extracts a three-dimensional object existing in an image captured by an image pickup device. A feature point extractor extracts a feature point from the three-dimensional object and a feature point corrector corrects a displacement of the feature point according to a detected running state of the vehicle. A residual image generator generates a residual image of the feature point whose displacement is corrected and the running state of the subject vehicle. A vanishing point calculator calculates a vanishing point and a road shape estimator estimates a road shape based on a straight line closest to both right and left sides of the subject vehicle from the straight lines passing through the vanishing point.

**Claims**

1. A road shape estimating device comprising:

   an image pickup device for capturing an image of an area in front of a subject vehicle at predetermined time intervals;
   a three-dimensional object extractor for extracting a three-dimensional object from the captured image;
   a road shape estimator for estimating a road shape based on the three-dimensional object;
   a running state detector for detecting a running state of the subject vehicle;
   a feature point extractor for extracting a feature point of the three-dimensional object;
   a feature point corrector for correcting a displacement of the feature point according to the running state of the subject vehicle;
   a residual image generator for generating a residual image of the feature point from the feature point which is extracted from a previously captured image and whose displacement is corrected and the running state of the subject vehicle; and

   a vanishing point calculator for calculating a vanishing point at which straight lines passing through the feature point and the residual image cross each other,

   wherein the road shape estimator estimates a road shape based on a straight line closest to both right and left sides of the subject vehicle from the straight lines passing through the vanishing point.

2. The road shape estimating device according to Claim 1, wherein the feature point extractor extracts a position where the three-dimensional object contacts a ground surface as the feature point.

# FIG.1

```
          C                                    S
┌─────────────────────┐          ┌─────────────────────┐
│ IMAGE PICKUP DEVICE │          │  RUNNING STATE      │
└─────────────────────┘          │  DETECTOR           │
                                 └─────────────────────┘

    ┌──────────────────────┐ M1
    │ THREE-DIMENSIONAL    │
    │ OBJECT EXTRACTOR     │                              U
    └──────────────────────┘

       ┌──────────────────┐ M2
       │ FEATURE POINT    │
       │ EXTRACTOR        │
       └──────────────────┘

       ┌──────────────────┐ M3
       │ FEATURE POINT    │
       │ CORRECTOR        │
       └──────────────────┘

       ┌──────────────────┐ M4
       │ RESIDUAL IMAGE   │
       │ GENERATOR        │
       └──────────────────┘

       ┌──────────────────┐ M5
       │ VANISHING POINT  │
       │ CALCULATOR       │
       └──────────────────┘

       ┌──────────────────┐ M6
       │ ROAD SHAPE       │
       │ ESTIMATOR        │
       └──────────────────┘
```

ROAD SHAPE

FIG.2A

AXIS OF SUBJECT
VEHICLE

FIG.2B

AXIS OF SUBJECT
VEHICLE

FIG.2C

AXIS OF SUBJECT
VEHICLE

**FIG.3A**

IMAGE OF THIS TIME

**FIG.3B**

IMAGE OF LAST TIME

**FIG.3C**

IMAGE OF TIME
BEFORE LAST

**FIG.3D**

FEATURE POINT AND
RESIDUAL IMAGE OF
IMAGE OF THIS TIME

FIG.4A

FIG.4B

FIG.4C

FIG.4D

# FIG.5

EP 2 040 196 A1

# FIG.6

EP 2 040 196 A1

# FIG.7

EP 2 040 196 A1

Europäisches
Patentamt

European
Patent Office

Office européen
des brevets

**PARTIAL EUROPEAN SEARCH REPORT**  **Application Number**

which under Rule 63 of the European Patent Convention EP 08 01 6230
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 11 203458 A (NISSAN MOTOR) 30 July 1999 (1999-07-30) * abstract; figures 1-23 * | 1,2 | INV. G06K9/00 B60W30/12 |
| A | EP 1 087 626 A (FUJI HEAVY IND LTD [JP]) 28 March 2001 (2001-03-28) * abstract; figures 11-17 * | 1,2 | |
| A | DE 199 06 614 A1 (EQUOS RESEARCH KABUSHIKI KAISH [JP]; AISIN AW CO [JP]) 7 October 1999 (1999-10-07) * abstract; figures 7-13 * | 1,2 | |
| A | JP 2006 309499 A (HONDA MOTOR CO LTD) 9 November 2006 (2006-11-09) * abstract * | | |
| A | & EP 1 884 907 A (HONDA MOTOR CO LTD [JP]) 6 February 2008 (2008-02-06) * abstract * | 1,2 | |
| A | US 2004/167669 A1 (KARLSSON L NIKLAS [US] ET AL) 26 August 2004 (2004-08-26) * paragraphs [0013] - [0020]; figures 3a,9-12 * | 1,2 | TECHNICAL FIELDS SEARCHED (IPC) G06K B60W |

-/--

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 29 January 2009 | Neubüser, Bernhard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04E07)

Europäisches
Patentamt
European
Patent Office
Office européen
des brevets

**PARTIAL EUROPEAN SEARCH REPORT**    Application Number

EP 08 01 6230

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | US 2007/165910 A1 (NAGAOKA NOBUHARU [JP] ET AL) 19 July 2007 (2007-07-19) * figures 1,3 * | 1,2 | |
| A | US 2007/100551 A1 (ISHIKURA HISASHI [JP]) 3 May 2007 (2007-05-03) * abstract * | 1,2 | |

TECHNICAL FIELDS SEARCHED (IPC)

EPO FORM 1503 03.82 (P04C10)

Europäisches
Patentamt
European
Patent Office
Office européen
des brevets

**INCOMPLETE SEARCH
SHEET C**

Application Number

EP 08 01 6230

Claim(s) searched incompletely:
      1,2

Claim(s) not searched:
         -

Reason for the limitation of the search (non-patentable invention(s)):

.


      -----


Further limitation of the search

Claim(s) searched incompletely:
      1,2

Claim(s) not searched:
         -

Reason for the limitation of the search:

Present claims 1,2 define an image-analysis-based road shape estimating
device. As acknowledged in the description paragraphs [0002] and [0003]
such devices are known: some detect road marking lines, some detect
markers having circular reflectors arranged at regular intervals along a
roadside. As a disadvantage it is seen that these methods do not work
when no marking is present, cf. paragraph [0004]. The application
proposes to detect three dimensional objects that MAY be located along a
road side, such as lighting poles, utility poles, guardrails, plants,
buildings etc. and to estimate the shape among others based on the base
point (called feature point in claim 1) of the recognized object.
The description does not provide support and disclosure in the sense of
Articles 84 and 83 EPC for "a three-dimensional object extractor for
extracting a three dimensional object from the captured image" (claim 1,
lines 4-5) which is suitable for the purpose of deriving the road shape
from the objects position (resp. the position of its base points),
namely: in the vicinity of a vehicle numerous objects may be visible,
some of which are far away from the road (potentially nevertheless
appearing to be close to the road e.g. due to a curve), some of which are
close to the road (but potentially not stationary, e.g. a vehicle on a
parallel or side road), some of which are on the road (and moving, e.g.
further vehicles driving in the same or opposite direction) and finally
some of which cross the road partially or completely (like bridges, large
panels, etc.). It is not commonly known how the device can distinguish
between the objects which are suitable for the purpose of road shape
detection and those which are not. The present application does not
contain any relevant teaching for this problem.

This non-compliance with the substantive provisions is to such an extent,
that a meaningful search of the whole claimed subject-matter of the claim
could not be carried out (Rule 63 EPC and Guidelines B-VIII, 3).

The search of the whole application was consequently restricted to only

Europäisches
Patentamt

European
Patent Office

Office européen
des brevets

INCOMPLETE SEARCH
SHEET C

Application Number

EP 08 01 6230

provide some evidence on devices/methods for road shape estimation or similar driving assistance systems/methods.

## ANNEX TO THE EUROPEAN SEARCH REPORT
## ON EUROPEAN PATENT APPLICATION NO.

EP 08 01 6230

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2009

| Patent document cited in search report | | | Publication date | Patent family member(s) | | | Publication date |
|---|---|---|---|---|---|---|---|
| JP 11203458 | A | | 30-07-1999 | NONE | | | |
| EP 1087626 | A | | 28-03-2001 | JP | 2001160137 | A | 12-06-2001 |
| | | | | US | 6985619 | B1 | 10-01-2006 |
| DE 19906614 | A1 | | 07-10-1999 | US | 6577334 | B1 | 10-06-2003 |
| JP 2006309499 | A | | 09-11-2006 | CA | 2605837 | A1 | 09-11-2006 |
| | | | | EP | 1884907 | A1 | 06-02-2008 |
| | | | | WO | 2006118020 | A1 | 09-11-2006 |
| | | | | US | 2008310679 | A1 | 18-12-2008 |
| EP 1884907 | A | | 06-02-2008 | CA | 2605837 | A1 | 09-11-2006 |
| | | | | JP | 2006309499 | A | 09-11-2006 |
| | | | | WO | 2006118020 | A1 | 09-11-2006 |
| | | | | US | 2008310679 | A1 | 18-12-2008 |
| US 2004167669 | A1 | | 26-08-2004 | US | 2007090973 | A1 | 26-04-2007 |
| US 2007165910 | A1 | | 19-07-2007 | DE | 102007002419 | A1 | 09-08-2007 |
| | | | | JP | 2007193445 | A | 02-08-2007 |
| US 2007100551 | A1 | | 03-05-2007 | JP | 4108706 | B2 | 25-06-2008 |
| | | | | JP | 2007122569 | A | 17-05-2007 |

EPO FORM P0459

For more details about this annex : see Official Journal of the European Patent Office, No. 12/82

**EP 2 040 196 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 11203458 A